# EUROPÄISCHE PATENTSCHRIFT

(11) **EP 3 433 792 B1**
(45) Veröffentlichungstag und Bekanntmachung des Hinweises auf die Patenterteilung: **09.12.2020**
(21) Anmeldenummer: 17721826.0
(22) Anmeldetag: 23.03.2017
(51) Int. Cl.: G06K 7/10

(54) **VERFAHREN ZUR OBJEKTERFASSUNG**
METHOD FOR DETECTING OBJECTS
PROCÉDÉ DE DÉTECTION D'OBJETS

(30) Priorität: 24.03.2016 DE 102016003488
(43) Veröffentlichungstag der Anmeldung: 30.01.2019
(73) Patentinhaber: Rietzler, Manfred, 87616 Marktoberdorf (DE)
(72) Erfinder: Rietzler, Manfred, 87616 Marktoberdorf (DE)
(74) Vertreter: advotec.
(86) Internationale Anmeldenummer: PCT/IB2017/000297
(87) Internationale Veröffentlichungsnummer: WO 2017/163123

(56) Entgegenhaltungen:
- WO-A1-2014/135217
- WO-A1-2015/155809
- DE-A1-102010 020 941
- US-A1- 2013 194 077

## Beschreibung

Die Erfindung betrifft ein Verfahren zur Objekterfassung nach dem Oberbegriff des Anspruchs 1.

Es entspricht der gängigen Praxis, Objekte zur Identifizierung mit RFID-Datenträgern zu versehen, die regelmäßig als sogenannte Transpondertags an den betreffenden Produkten oder Gegenständen angeordnet werden.

Neben der Eigenschaft als Identifikationsmittel dienen RFID-Datenträger auch allgemein als Informationsträger, die beispielsweise Daten zur Definition besonderer Eigenschaften der Objekte oder Daten enthalten, die eine Zuordnung der Objekte ermöglichen, also insbesondere Angaben über den Hersteller oder Eigentümer der Objekte umfassen.

Zum Auslesen bzw. Erfassen der auf den RFID-Datenträgern gespeicherten Objektdaten sind als gängige Alternativen bekannt, entweder durch eine Bedienungsperson ein als Handheld ausgeführtes mobiles Lesegerät in eine definierte Leseposition gegenüber jedem einzelnen RFID- Datenträger zu positionieren und das Lesegerät für jeden Lesevorgang erneut zu aktivieren, um die einzelnen RFID- Datenträger sukzessive auszulesen oder über fest installierte, in der Regel an einer Deckenkonstruktion "overhead" angeordnete Lesegeräte die RFID-Datenträger auszulesen, wobei jedoch wegen der relativ geringen Sendereichweite der RFID-Datenträger eine Vielzahl von Lesegeräten in einem dichten Raster angeordnet werden müssen, um sicherzustellen, dass alle RFID- Datenträger einer Datenträgerpopulation erfasst werden. Die bekannten Lösungen erfordern daher in dem ersten Fall einen hohen Personaleinsatz mit den entsprechenden Kosten oder in dem anderen Fall einen hohen Installationsaufwand mit den entsprechenden Kosten.

Aus WO 2015/155809 A1 ist ein Verfahren zur Objekterfassung mit einer Mehrzahl von jeweils einem Objekt zugeordneten RFID-Datenträgern bekannt, wobei die RFID-Datenträger eine Population mit beliebiger Verteilung ausbilden und eine Mehrzahl mobiler Lesegeräte vorgesehen ist. Hierbei ist vorgesehen, dass für den Fall, dass sich eine Mehrzahl der Lesegeräte innerhalb der Datenträgerumgebung befindet, lediglich ein Lesegerät zur Übertragung von Daten zu einer Netzwerkschnittstelle verwendet wird und die Datenübertragung durch die anderen Lesegeräte angehalten wird.

Die US 2013/194077 A1 betrifft ein Verfahren, bei dem das Bewegungsprofil eines einzelnen Lesegerätes beim Warenscan sichtbar gemacht wird.

Die WO 2014/135217 A1 beschreibt ein Verfahren zur Ermittlung einer Ortsinformation für einen zu lokalisierenden RFID-Datenträger.

Aus der DE 10 2010 020 941 A1 ist ein Verfahren zur Funktionsprüfung von mit RFID-Datenträgern versehenen Objekten mittels eines mobilen Lesegerätes bekannt.

Der Erfindung liegt die Aufgabe zugrunde, ein Verfahren zur Objekterfassung vorzuschlagen, das kostengünstiger ist.

Zur Lösung dieser Aufgabe weist die Erfindung die Merkmale des Anspruchs 1 auf.

Bei dem erfindungsgemäßen Verfahren kommt eine Mehrzahl mobiler Lesegeräte zum Einsatz, die eine erste Schnittstelle zur Herstellung einer ersten Datenverbindung mit einem RFID-Datenträger zum Empfang von auf dem RFID-Datenträger gespeicherten Objektdaten oder Positionsdaten und eine zweite Schnittstelle zur Herstellung einer zweiten Datenverbindung zu mindestens einer Netzwerkschnittstelle und berührungslosen Übermittlung eines Objektdatensatzes oder Positionsdatensatzes an die Netzwerkschnittstelle aufweist, wobei die Netzwerkschnittstelle zur Herstellung einer Netzwerk-Datenverbindung mit einem Netzwerkserver dient, wobei die Lesegeräte sich in einem aktiven Betriebsmodus befinden, während die Lesegeräte jeweils längs einer beliebigen Bewegungsstrecke zwischen zumindest zwei unterschiedlichen Positionen in der Datenträger-Umgebung bewegt werden, derart, dass sich die Relativposition der Lesegeräte ständig ändert und die Lesegeräte Objektdaten oder Positionsdaten der stationär angeordneten RFID-Datenträger empfangen innerhalb deren Reichweite sich die Lesegeräte befinden, derart, dass in Abhängigkeit von der Position der Lesegeräte in den Lesegeräten eine Datenträgerzuordnung zwischen einem RFID-Datenträger und dem Lesegerät mit Ausbildung eines Objektdatensatzes oder Positionsdatensatz erfolgt, der die Objektdaten oder die Positionsdaten und eine Lesegerätekennung aufweist, und anschließend eine Übermittlung des Objektdatensatzes oder Positionsdatensatzes an die Netzwerkschnittstelle innerhalb der Sendereichweite der Lesegeräte erfolgt, wobei sich die Datenträgerzuordnung zwischen den RFID-Datenträgern und den Lesegeräten und somit der Objektdatensatz oder der Positionsdatensatz in Abhängigkeit von der Relativposition der Lesegeräte ändert.

Bei den Objekten, die Gegenstand der Anwendung des erfindungsgemäßen Verfahrens sind, kann es sich neben Sachgegenständen auch um Lebewesen, insbesondere auch Personen, handeln.

Bei dem erfindungsgemäßen Verfahren werden mobile kabellose Lesegeräte genutzt, die nicht individuell aktiviert werden müssen, sondern permanent aktiv geschaltet sind, so dass vorzugsweise ein Objektdatensatz oder Positionsdatensatz gebildet wird, sobald sich ein Lesegerät innerhalb der Reichweite eines RFID-Datenträgers befindet.

Beispielsweise können sich ohnehin innerhalb der RFID-Datenträger-Population bewegende Personen mit derartigen Lesegeräten ausgerüstet sein, die beispielsweise als "Wearable Device" ausgebildet sind, wobei die Personen dann keine aktive Datenerfassung betreiben, sondern völlig anderen Tätigkeiten nachgehen können und dabei ohne aktives Zutun lediglich mobile Träger der Lesegeräte bilden, also insbesondere nicht die Lesegeräte für einen Lesevorgang aktivieren müssen.

Bei der Erfindung wird eine Mehrzahl mobiler Lesegeräte eingesetzt, wobei insbesondere bei beschränkter Reichweite der Lesegeräte eine genügend große Anzahl von Lesegeräten innerhalb der RFID-Datenträger-Population bewegt wird, um mit ausreichender Wahrscheinlichkeit im Verlauf der Bewegung der Lesegeräte möglichst zu allen RFID-Datenträgern zugehörige Objektdatensätze oder Positionsdatensätze in den Lesegeräten auszubilden.

Wenn im Falle von Lesegeräten mit beschränkter Sendereichweite mehrere Netzwerkschnittstellen vorgesehen werden, derart, dass sich die Zuordnung zwischen einem Lesegerät und einer Netzwerkschnittstelle in Abhängigkeit von der Bewegungsstrecke der Lesegeräte ändert, kann die Qualität der Datenübertragung zu einem Netzwerkserver erhöht oder die Übermittlungsrate, also die Anzahl der pro Zeiteinheit an eine Netzwerkschnittstelle übermittelten Objektdatensätze oder Positionsdatensätze, erhöht werden.

Vorzugsweise werden die Objektdatensätze oder Positionsdatensätze vor Übermittlung an die Netzwerkschnittstelle in einem Zwischenspeicher des Lesegerätes gespeichert, so dass die Objektdatensätze oder Positionsdatensätze auch zeitlich verzögert an eine Netzwerkschnittstelle übermittelt werden können, sobald eine Datenverbindung zu einer Netzwerkschnittstelle besteht.

Vorzugsweise erfolgt die Übermittlung der Objektdatensätze oder Positionsdatensätze an die Netzwerkschnittstelle in definierten Zeitintervallen, so dass die Übermittlungsrate auch bei permanent zu einer Netzwerkschnittstelle bestehenden Datenverbindung begrenzt ist bzw. einstellbar ist. In den durch die Zeitintervalle gebildeten Lesepausen können insbesondere die Hochfrequenz-Leistungskreise des Lesegerätes zur Energieeinsparung inaktiv geschaltet werden.

Besonders vorteilhaft für eine nachfolgende effektive Auswertung der Objektdatensätze in einem Netzwerkserver ist es, wenn die in einem Lesegerät gebildeten Objektdatensätze oder Positionsdatensätze vor Übermittlung an die Netzwerkschnittstelle im Lesegerät prozessiert werden, um beispielsweise in dem Fall, dass aufgrund der Bewegungstrecke des Lesegerätes redundante Objektdatensätze betreffend ein und denselben RFID-Datenträger bestehen, also etwa in dem Fall, dass das Lesegerät zuerst in einer Richtung und anschließend in der Gegenrichtung an einem RFID-Datenträger vorbei bewegt worden ist, lediglich einen Objektdatensatz oder Positionsdatensatz für jeden RFID-Datenträger von dem Lesegerät an die Netzwerkschnittstelle übermittelt wird, und so die Datenmenge für eine nachfolgende Auswertung reduziert wird.

Wenn im Netzwerkserver eine Prozessierung der Objektdatensätze oder Positionsdatensätze erfolgt, derart, das von unterschiedlichen Lesegeräten übermittelte redundante, denselben RFID-Datenträger betreffende Objektdatensätze oder Positionsdatensätze ausgefiltert werden, kann für eine nachfolgende Auswertung die Datenmenge reduziert werden.

Insbesondere dann, wenn von ein und demselben Lesegerät aus unterschiedlichen Positionen Objektdatensätze oder Positionsdatensätze derselben RFID-Datenträger gelesen werden, können diese Datensätze zur Präzisierung überlagert werden.

Bei einer besonders vorteilhaften Ausführungsform des Verfahrens wird zur Positionsbestimmung der RFID-Datenträger die RFID-Datenträger Population mit in einer definierten Verteilung in der Datenträger-Umgebung angeordneten, jeweils einen Positionsdatensatz oder eine Referenzkennung aufweisenden Positions-RFID-Datenträgern ergänzt, deren Positionsdatensatz mit dem Objektdatensatz im Lesegerät verknüpft wird. Anstatt der Ergänzung der RFID-Datenträger mit den Positions-RFID-Datenträgern können die RFID-Datenträger auch durch die Positions-RFID-Datenträger ersetzt werden.

Zur Positionsbestimmung der RFID-Datenträger können die Lesegeräte auch mit einem externen Ortungssystem versehen sein, wobei ein Positionsdatensatz des Lesegerätes mit dem Objektdatensatz im Lesegerät verknüpft wird.

Wenn der Objektdatensatz oder der Positionsdatensatz im Lesegerät mit einem Zeitparameter verknüpft wird, lässt sich im Falle eines nicht stationären RDID-Datenträgers ein Bewegungsprofil des RFID-Datenträges bzw. des mit dem RFID-Datenträger versehenen Objekts darstellen.

Wenn der Objektdatensatz im Lesegerät mit einem Umgebungsparameterdatensatz verknüpft wird, lässt sich ein Umgebungsprofil des RFID-Datenträges bzw. des mit dem RFID-Datenträger versehenen Objekts darstellen.

Vorzugsweise wird der Objektdatensatz im Lesegerät mit einem Signalstärkeparameter verknüpft, so dass redundante Objektdatensätze eines RFID-Datenträgers bei bekannter Position des Lesegerätes eine Positionsbestimmung des RFID-Datenträgers über Triangulation ermöglichen.

Grundsätzlich können als Lesegeräte beliebige mobile Geräte genutzt werden, die mit den entsprechenden Schnittstellen versehen sind.

Besonders vorteilhaft ist es, wenn ohnehin von einer Person getragene, individuell der Person zugeordnete Geräte im Sinne von "Personal Devices" genutzt werden, so dass eine besondere gerätetechnische Ausstattung der als mobile Träger fungierenden Personen nicht notwendig ist. Auf diese Art und Weise lässt sich eine Lesegeräte-Infrastruktur als "Crowd-Reading" gestalten, wobei eine besonders vorteilhafte Realisierungsmöglichkeit des "Crowd-Reading" in der Nutzung von mit entsprechenden Schnittstellen versehenen mobilen Telefonen als Lesegeräte besteht.

Aktuell sind bereits mit HF-RFID-Schnittstellen versehene Mobiltelefone im Einsatz, die allerdings aufgrund der HF-Technik nur eine sehr begrenzte Reichweite aufweisen, um Objektdaten oder Positionsdaten aus einem RFID-Datenträger zu empfangen. Der Einsatz von UHF-RFID-Schnittstellen in Verbindung mit entsprechenden UHF-RFID-Datenträgern ermöglicht Übertragungsreichweiten bis in den Bereich von 10 m, so dass etwa eine im normalen Publikumsverkehr auftretende Personendichte von Personen, die mit entsprechenden "Personal Devices" ausgestattet sind, ausreichend ist, um zu einem Verhältnis zwischen der Anzahl von Lesegeräten und der Reichweite der RFID-Datenträger zu gelangen, so dass eine flächendeckende Objekterfassung von etwa in einem Kaufhaus angeboten Objekten möglich wird.

Wenn der Netzwerkserver als ein unterer Server eines vertikalen Serververbunds umfassend zumindest einen oberen Server ausgebildet ist, kann mit dem unteren Server der Umfang des Datenzugriffs von dem oberen Server auf den unteren Server bestimmt werden, so dass zum einen vom oberen Server kein direkter Datenzugriff auf den RFID-Datenträger möglich ist und zum andern festgelegt werden kann auf welche Objektdaten des im unteren Server gespeicherten Objektdatensatzes ein Datenzugriff vom oberen Server aus möglich ist, insbesondere derart, dass lediglich der untere Server des Serverbunds einen Datenzugriff auf einen Datenspeicher mit sämtlichen Objektdatensätzen bzw. Objektdaten der Objektdatensäte ermöglicht, und lediglich eine Datenübertragung einer definierten Datenteilmenge vom Datenspeicher des unteren Servers in den Datenspeicher des oberen Servers erfolgt.

Nachfolgend wir eine mögliche Ausführung des erfindungsgemäßen Verfahrens Bezugnehmend auf die Zeichnung näher erläutert.

Es zeigen:
- **Fig. 1:**: eine schematische Darstellung einer RFID-Datenträger-Population mit einer ersten Momentaufnahme der Bewegung der unabhängig voneinander bewegten Lesegeräte;
- **Fig. 2:**: eine nachfolgende zweite Momentaufnahme der Bewegung der Lesegeräte;
- **Fig.** 3: eine nachfolgende dritte Momentaufnahme der Bewegung der Lesegeräte.

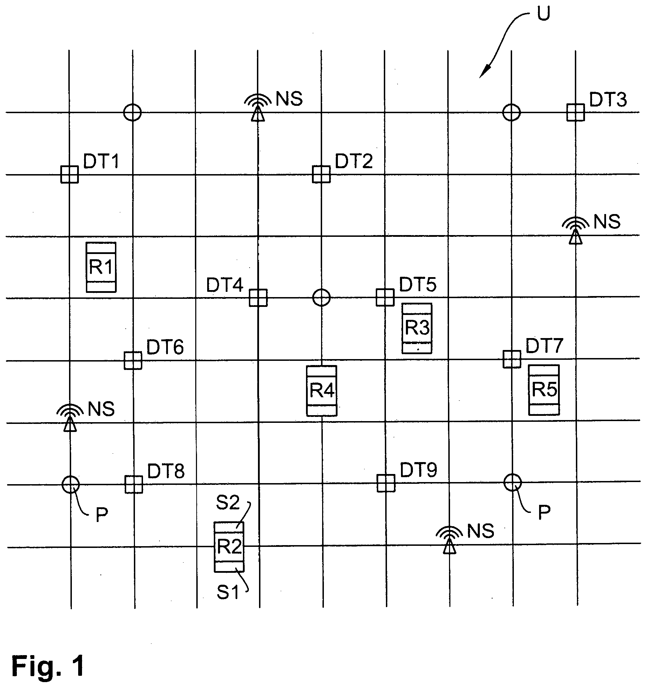

In den **Fig. 1 bis 3** sind zu unterschiedlichen Zeitpunkten einer Bewegung von insgesamt sieben Lesegeräten R1 bis R7 in einer Datenträgerumgebung U die jeweils von den Lesegeräten innerhalb der Datenträgerumgebung U erreichten Relativpositionen dargestellt. In den **Fig. 1 bis 3** sind in der Datenträgerumgebung U neun definiert verteilt angeordnete RFID-Datenträgern DT1 bis DT9 vorgesehen, die stationäre Positionen einnehmen und zur besseren Erläuterung des Verfahrens auf Rasterpunkten eines Verteilungsrasters angeordnet sind, wobei im nachfolgenden davon ausgegangen wird, dass die Sendereichweite der RFID-Datenträger DT1 bis DT9 zwei Rasterfelder überdeckt, so dass beispielsweise in der **Fig. 1** dargestellten Zeitpunkt sich die Lesegeräte R1 bis R5 innerhalb der Datenträgerumgebung U befinden, wobei sich R1 innerhalb der Reichweite der Datenträger DT1 und DT6, R2 innerhalb der Reichweite des Datenträger DT8, R3 innerhalb der Reichweite der Datenträger DT5 und DT7 sowie R5 innerhalb der Reichweite des Datenträgers DT7 befindet; die Objektdaten des Datenträgers DT9 jedoch von keinem Lesegerät empfangen werden können. Somit werden also während der dargestellten Momentaufnahme Objektdaten vom der RFID-Datenträger DT8 zum Lesegerät R2 übertragen, wohingegen vom RFID-Datenträger DT9 zum Lesegerät R2 wegen nicht ausreichender Reichweite keine Objektdaten übertragen werden können. Die Reichweite der Lesegeräte R1 bis R7 zur Übermittlung der Objektdaten zu den Netzwerkschnittstellen überdeckt in den dargestellten Momentaufnahmen drei Rasterfelder.

Weiterhin sind in der Datenträgerumgebung U im vorliegenden Fall ebenfalls auf Rasterpunkten Netzwerkschnittstellen NS1 bis NS4 stationär angeordnet, die eine kabellose Datenverbindung zu einem nicht dargestellten Netzwerkrechner ermöglichen. Die Datenverbindung zwischen den Netzwerkschnittstellen NS1 bis NS4 und dem Netzwerkrechner können beispielsweise als WLAN-Verbindung ausgebildet sein.

Die Lesegeräte R1 bis R5 weisen eine erste Schnittstelle S1 zur Verbindung mit den RFID-Datenträgern auf, die wie die Schnittstelle der RFID-Datenträger als UHF-Schnittstelle ausgebildet ist und eine zweite Schnittstelle auf, die wie die Netzwerkschnittstelle als WLAN-Schnittstelle ausgebildet sein kann. Zum Zwecke der Erläuterung des Verfahrens wird nachfolgend davon ausgegangen, dass die Reichweite der WLAN-Datenverbindung zwischen den Lesegeräten R1 bis R5und den Netzwerkschnittstellen drei Rasterfelder überdeckt.

Weiterhin ist bei dem dargestellten Ausführungsbeispiel des Verfahrens die RFID-Datenträger-Population umfassend die RFID-Datenträger DT1 bis DT5, die die Objektdaten der mit den RFID-Datenträgern versehen Objekte, also etwa Verkaufsgegenstände aufweisen, durch Positions-RFID-Datenträger P ergänzt, die eine Positionsbestimmung der RFID-Datenträger ermöglichen.

Die in **Fig. 1** dargestellte Momentaufnahme der Bewegung der mobilen Lesegeräte R1 bis R5 zeigt die Lesegeräte R1 bis R5 in einer temporären Relativanordnung, bei der sich die Lesegeräte R1 bis R5 innerhalb der Datenträgerumgebung U in einer derartigen Verteilung befinden, in der R1 Objektdaten von DT1 und DT6, R2 Objektdaten von DT8, R3 Objektdaten von DT5 und7, R5 Objektdaten von DT 7 und R4 keine Objektdaten empfängt. Eine Übermittlung von Objektdaten zu den Netzwerkschnittstellen ist aufgrund der Verteilung der Lesegeräte R1 bis R5 lediglich möglich von den Lesegeräten R1, R2, R4 und R5, da R3 nicht hinreichend nah an einer Netzwerkschnittstelle NS angeordnet ist und R4 zum dargestellten Zeitpunkt außerhalb der Reichweite eines RFID-Datenträgers ist.

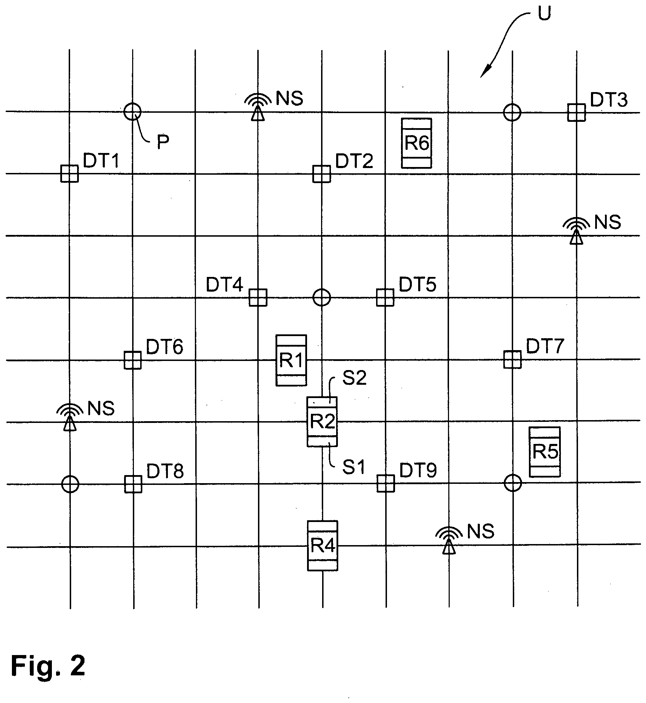

**Fig. 2** zeigt eine aufgrund einer zwischenzeitlich ausgeführten Bewegung der Lesegeräte geänderte Verteilung der Lesegeräte R1, R2, R4, R5 und R6, wobei R3 zwischenzeitlich nicht mehr in der Datenträgerumgebung U vorhanden ist und stattdessen das Lesegerät R6 in die Datenträgerumgebung U gelangt ist. In der dargestellten Verteilung empfängt R1 Objektdaten von DT4 und DT5, R2 Objektdaten von DT9, R4 Objektdaten von DT9, R5 Objektdaten von DT7 und R6 Objektdaten von DT2. Eine Übermittlung von Objektdaten zu den Netzwerkschnittstellen NS ist aufgrund der Verteilung der Lesegeräte R1, R2, R4, R5 und R6 lediglich möglich von den Lesegeräten R2, R4, R5 und R6, da R1 nicht hinreichend nah an einer Netzwerkschnittstelle NS angeordnet ist.

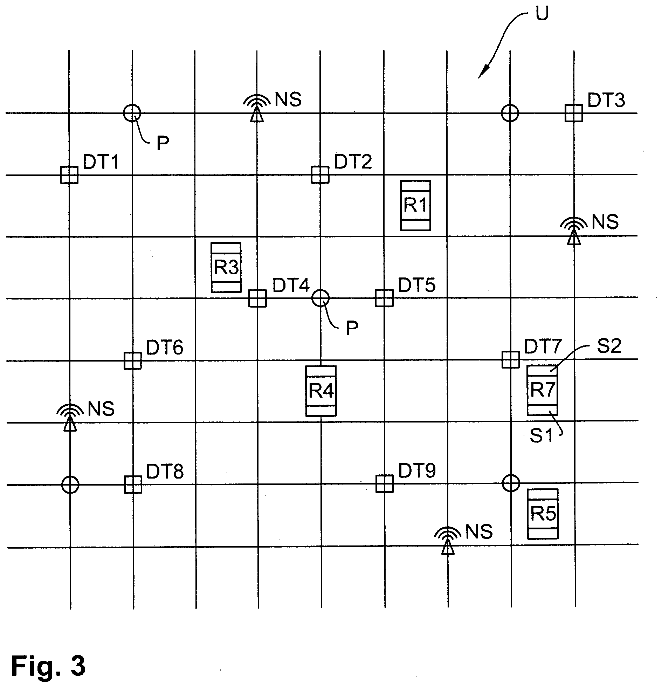

**Fig. 3** zeigt eine aufgrund einer weiteren zwischenzeitlich ausgeführten Bewegung der Lesegeräte geänderte Verteilung der Lesegeräte R1, R3, R4, R5 und R7, wobei R2 und R6 zwischenzeitlich nicht mehr in der Datenträgerumgebung vorhanden sind und stattdessen R7 in die Datenträgerumgebung U gelangt ist. In der dargestellten Verteilung empfängt R1 Objektdaten von DT2 und DT5, R3 Objektdaten von DT4, und R7 Objektdaten von DT7. Eine Übermittlung von Objektdaten zu den Netzwerkschnittstellen NS ist aufgrund der Verteilung der Lesegeräte R1, R3, R4, R5 und R7 lediglich möglich von den Lesegeräten R1, R3, und R7.

Aus einer Zusammenschau der vorstehend erläuterten Relativanordnungen der Lesegeräte die sich in zeitlich einander nachfolgenden Momentaufnahmen der durch die mobilen Lesegeräte ausgeführten Bewegungsprofile einstellen, wird deutlich, dass aufgrund der Bewegung der Lesegeräte, aus denen sich wechselnde Relativpositionen der Lesegeräte gegenüber den RFID-Datenträgern ergeben, trotz einer begrenzten Reichweite der Lesegeräte eine wesentlich geringere Anzahl von Lesegeräten zur Erfassung sämtlicher Objektdaten ausreichend ist, als dies bei einer stationären Anordnung von Lesegeräten mit vergleichbarer Reichweite der Fall wäre.

## Patentansprüche

1. Verfahren zur Objekterfassung mit einer Mehrzahl von jeweils einem Objekt zugeordneten, insbesondere als Tag ausgeführten RFID-Datenträgern DT, die eine RFID-Datenträger-Population mit beliebiger Verteilung der RFID-Datenträger in einer Datenträger-Umgebung U ausbilden, und einer Mehrzahl mobiler Lesegeräte R, die eine erste Schnittstelle S1 zur Herstellung einer ersten Datenverbindung mit einem RFID-Datenträger DT zum Empfang von auf dem RFID- Datenträger DT gespeicherten Objektdaten oder Positionsdaten und eine zweite Schnittstelle S2 zur Herstellung einer zweiten Datenverbindung zu mindestens einer Netzwerkschnittstelle NS und berührungslosen Übermittlung eines Objektdatensatzes oder Positionsdatensatzes an die Netzwerkschnittstelle NS aufweist, wobei die Netzwerkschnittstelle NS zur Herstellung einer Netzwerk- Datenverbindung mit einem Netzwerkserver dient,
**dadurch gekennzeichnet,**
**dass** die Lesegeräte R sich in einem aktiven Betriebsmodus befinden, während die Lesegeräte R jeweils längs einer beliebigen Bewegungsstrecke zwischen zumindest zwei unterschiedlichen Positionen in der Datenträger-Umgebung bewegt werden, derart, dass sich die Relativposition der Lesegeräte ständig ändert und die Lesegeräte R Objektdaten oder Positionsdaten der stationär angeordneten RFID-Datenträger DT empfangen, innerhalb deren Reichweite sich die Lesegeräte R befinden, derart, dass in Abhängigkeit von der Position der Lesegeräte R in den Lesegeräten R eine Datenträgerzuordnung zwischen einem RFID-Datenträger DT und dem Lesegerät R mit Ausbildung eines Objektdatensatzes oder Positionsdatensatzes erfolgt, der die Objektdaten oder Positionsdaten und eine Lesegerätekennung aufweist, und anschließend eine Übermittlung des Objektdatensatzes oder Positionsdatensatzes an die Netzwerkschnittstelle NS innerhalb der Sendereichweite der Lesegeräte R erfolgt, wobei sich die Datenträgerzuordnung zwischen den RFID-Datenträgern DT und den Lesegeräten R und somit der Objektdatensatz oder Positionsdatensatz in Abhängigkeit von der Relativposition der Lesegeräte R ändert.

2. Verfahren nach Anspruch 1,
**dadurch gekennzeichnet,**
**dass** im Falle von Lesegeräten R mit beschränkter Sendereichweite mehrere Netzwerkschnittstellen NS vorgesehen werden, derart, dass sich die Zuordnung zwischen einem Lesegerät R und einer Netzwerkschnittstelle NS in Abhängigkeit von der Bewegungsstrecke der Lesegeräte R ändert.

3. Verfahren nach Anspruch 1 oder 2,
**dadurch gekennzeichnet,**
**dass** die Objektdatensätze oder Positionsdatensätze vor Übermittlung an die Netzwerkschnitstelle NS in einem Zwischenspeicher des Lesegerätes R gespeichert werden.

4. Verfahren nach Anspruch 3,
**dadurch gekennzeichnet,**
**dass** die Übermittlung der Objektdatensätze oder Positionsdatensätze an die Netzwerkschnittstelle NS in definierten Zeitintervallen erfolgt.

5. Verfahren nach Anspruch 3 oder 4,
**dadurch gekennzeichnet,**
**dass** die in einem Lesegerät R gebildeten Objektdatensätze oder Positionsdatensätze vor Übermittlung an die Netzwerkschnittstelle NS prozessiert werden.

6. Verfahren nach Anspruch 5,
**dadurch gekennzeichnet,**
**dass** bei aufgrund der Bewegungsstrecke redundanten Objektdatensätzen oder Positionsdatensätzen lediglich ein Objektdatensatz oder Positionsdatensatz für jeden RFID-Datenträger DT an die Netzwerkschnittstelle NS übermittelt wird.

7. Verfahren nach einem der vorangehenden Ansprüche,
**dadurch gekennzeichnet,**
**dass** im Netzwerkserver eine Prozessierung der Objektdatensätze oder Positionsdatensätze erfolgt, derart, dass von unterschiedlichen Lesegeräten R übermittelte redundante, denselben RFID-Datenträger DT betreffende Objektdatensätze oder Positionsdatensätze ausgefiltert werden.

8. Verfahren nach einem der vorangehenden Ansprüche,
**dadurch gekennzeichnet,**
**dass** zur Positionsbestimmung der RFID-Datenträger DT die RFID-Datenträger-Population mit in einer definierten Verteilung in der Datenträger-Umgebung U angeordneten, jeweils einen Positionsdatensatz oder eine Referenzkennung aufweisenden Positions-RFID-Datentägern P versehen ist, deren Positionsdatensatz mit dem Objektdatensatz im Lesegerät R verknüpft wird.

9. Verfahren nach einem der vorangehenden Ansprüche,
**dadurch gekennzeichnet,**
**dass** zur Positionsbestimmung der RFID-Datenträger DT die Lesegeräte R mit einem externen Ortungssystem versehen sind, und ein Positionsdatensatz des Lesegerätes R mit dem Objektdatensatz im Lesegerät R verknüpft wird.

10. Verfahren nach einem der vorangehenden Ansprüche,
**dadurch gekennzeichnet,**
**dass** der Objektdatensatz oder Positionsdatensatz im Lesegerät R mit einem Zeitparameter verknüpft wird.

11. Verfahren nach einem der vorangehenden Ansprüche,
**dadurch gekennzeichnet,**
**dass** der Objektdatensatz oder Positionsdatensatz im Lesegerät R mit einem Umgebungsparameterdatensatz verknüpft wird.

12. Verfahren nach einem der vorangehenden Ansprüche,
**dadurch gekennzeichnet,**
**dass** der Objektdatensatz oder Positionsdatensatz im Lesegerät R mit einem Signalstärkeparameterdatensatz verknüpft wird.

13. Verfahren nach einem der vorangehenden Ansprüche,
**dadurch gekennzeichnet,**
**dass** als Lesegeräte R mit entsprechenden Schnittstellen versehene personalisierte Geräte eingesetzt werden.

14. Verfahren nach einem der vorangehenden Ansprüche,
**dadurch gekennzeichnet,**
**dass** als Lesegeräte R mit entsprechenden Schnittstellen versehene mobile Telefone eingesetzt werden.

15. Verfahren nach einem der vorangehenden Ansprüche,
**dadurch gekennzeichnet,**
**dass** der Netzwerkserver als ein unterer Server eines vertikalen Serververbunds umfassend zumindest einen oberen Server ausgebildet ist.

16. Verfahren nach Anspruch 15,
**dadurch gekennzeichnet,**
**dass** lediglich der untere Server des Serverbunds einen Datenzugriff auf einen Datenspeicher mit sämtlichen Objektdatensätzen bzw. Objektdaten der Objektdatensätze ermöglicht, und lediglich eine Datenübertragung einer definierten Datenteilmenge vom Datenspeicher des unteren Servers in den Datenspeicher des oberen Servers erfolgt.

## Claims

1. A method for detecting objects using a plurality of RFID data carriers *DT*, each RFID data carrier *DT* being allocated to one object and in particular being designed as a tag, the plurality of RFID data carriers *DT* forming a population of RFID data carriers having an arbitrary distribution of the RFID data carriers in a data carrier environment *U*, and using a plurality of mobile readers *R*, the plurality of mobile readers *R* having a first interface *S1* for establishing a first data connection with an RFID data carrier *DT* to receive object data or position data which is stored on the RFID data carrier *DT* and a second interface *S2* for establishing a second data connection with at least one network interface *NS* and for contactlessly transferring an object data set or a position data set to the network interface *NS*, wherein the network interface *NS* serves to establish a network data connection with a network server,
**characterized in that**
the readers *R* are in an active operating mode while each reader *R* is moved along an arbitrary movement path between at least two different positions within the data carrier environment in such a manner that the relative positions of the readers are constantly changing and the readers *R* are receiving object data or position data from the stationarily disposed RFID data carriers *DT* within whose range the readers *R* are located, such that, as a function of the position of the readers *R*, there is performed a data carrier allocation in the readers *R* between an RFID data carrier *DT* and the reader *R* thereby creating an object data set or a position data set which comprises the object data or the position data and a reader identification, and such that the object data set or the position data set is subsequently transferred to the network interface *NS* which is within the transmission range of the readers *R*, wherein the data carrier allocation between the RFID data carriers *DT* and the readers *R* and thus the object data set or the position data set is changing as a function of the relative position of the readers *R*.

2. The method according to claim 1,
**characterized in that**,
when using readers *R* having a limited transmission range, several network interfaces *NS* are provided such that the allocation between a reader *R* and a network interface *NS* is changing as a function of the movement path of the readers *R*.

3. The method according to claim 1 or 2,
**characterized in that**
the object data sets or the position data sets are stored in a buffer of the reader *R* before they are transferred to the network interface *NS.*

4. The method according to claim 3,
**characterized in that**
the object data sets or the position data sets are transferred to the network interface *NS* within defined time periods.

5. The method according to claim 3 or 4,
**characterized in that**
the object data sets or the position data sets created in a reader *R* are processed before they are transferred to the network interface *NS.*

6. The method according to claim 5,
**characterized in that**,
when object data sets or position data sets are redundant due to the movement path, only one object data set or position data set of each RFID data carrier *DT* is transferred to the network interface *NS.*

7. The method according to any one of the preceding claims,
**characterized in that**
the object data sets or the position data sets are processed in the network server such that redundant object data sets or position data sets which are transferred by different readers *R* and relate to the same RFID data carrier *DT* are filtered out.

8. The method according to any one of the preceding claims,
**characterized in that**,
for determining the position of the RFID data carriers *DT*, the RFID data carrier population is provided with position RFID data carriers *P* which are arranged in a defined distribution within the data carrier environment *U* and each have a position data set or a reference identification, the position data set of said position RFID data carriers *P* being linked to the object data set in the reader *R*.

9. The method according to any one of the preceding claims,
**characterized in that**,
for determining the position of the RFID data carriers *DT*, the readers *R* are provided with an external tracking system and **in that** a position data set of the reader *R* is linked to the object data set in the reader *R.*

10. The method according to any one of the preceding claims,
**characterized in that**
the object data set or the position data set in the reader *R* is linked to a time parameter.

11. The method according to any one of the preceding claims,
**characterized in that**
the object data set or the position data set in the reader *R* is linked to an environmental parameter data set.

12. The method according to any one of the preceding claims,
**characterized in that**
the object data set or the position data set in the reader *R* is linked to a signal strength parameter data set.

13. The method according to any one of the preceding claims,
**characterized in that**
personalized devices which are provided with corresponding interfaces are used as readers *R*.

14. The method according to any one of the preceding claims,
**characterized in that**
mobile phones which are provided with corresponding interfaces are used as readers *R*.

15. The method according to any one of the preceding claims,
**characterized in that**
the network server is designed as a lower server of a vertically structured server cluster comprising at least one upper server.

16. The method according to claim 15,
**characterized in that**
only the lower server of the server cluster allows a data access to a data store comprising the entirety of all object data sets and object data of the object data sets and **in that** only data of a defined partial quantity of the data stored in the data store of the lower server is transferred into the data store of the upper server.

## Revendications

1. Procédé pour la saisie d'objets utilisant une pluralité de supports de données RFID *DT*, chaque support de données RFID *DT* étant attribué à un objet et, notamment, étant réalisé comme étiquette, la pluralité de supports de données RFID *DT* formant une population de supports de données RFID ayant une distribution arbitraire des supports de données RFID dans un environnement *U* des supports de données, et utilisant une pluralité de lecteurs *R* mobiles, la pluralité de lecteurs mobiles *R* ayant une première interface *S1* pour établir une première liaison de données avec un support de données RFID *DT* pour recevoir des données d'objets ou des données de positions mémorisées sur le support de données RFID *DT* et une deuxième interface *S2* pour établir une deuxième liaison de données avec au moins une interface de réseau *NS* et pour transmettre un ensemble de données d'objets ou un ensemble de données de positions sans contact à l'interface de réseau *NS*, l'interface de réseau *NS* servant à établir une liaison de données de réseau avec un serveur de réseau,
**caractérisé en ce que**
les lecteurs *R* sont en mode de fonctionnement actif pendant que chaque lecteur *R* est déplacé le long d'une trajectoire de déplacement arbitraire entre au moins deux positions différentes dans l'environnement des supports de données de manière que les positions relatives des lecteurs changent constamment et les lecteurs *R* reçoivent des données d'objets ou des données de positions des supports de données RFID *DT* qui sont disposés de manière stationnaire et à la portée desquels se trouvent les lecteurs *R*, de manière qu'une attribution des supports de données est effectuée, en fonction des positions des lecteurs *R*, dans les lecteurs *R* entre un support de données RFID *DT* et le lecteur *R* tout en formant un ensemble de données d'objets ou un ensemble de données de positions qui comprend les données d'objets ou les données de positions et une identification du lecteur, et de manière qu' ensuite, l'ensemble de données d'objets ou l'ensemble de données de positions est transmis à l'interface de réseau *NS* située à portée d'émission des lecteurs *R*, l'attribution des supports de données entre les supports de données RFID *DT* et les lecteurs *R* et, par conséquent, l'ensemble de données d'objets ou l'ensemble de données de positions changeant en fonction des positions relatives des lecteurs *R.*

2. Procédé selon la revendication 1,
**caractérisé en ce que**
plusieurs interfaces de réseau *NS* sont prévues lorsque des lecteurs *R* ayant une portée d'émission limitée sont utilisés de manière que l'attribution entre un lecteur *R* et une interface de réseau *NS* change en fonction de la trajectoire de déplacement des lecteurs *R*.

3. Procédé selon la revendication 1 ou 2,
**caractérisé en ce que**
les ensembles de données d'objets ou les ensembles de données de positions sont mémorisés dans une mémoire tampon du lecteur *R* avant qu'ils soient transmis à l'interface de réseau *NS.*

4. Procédé selon la revendication 3,
**caractérisé en ce que**
les ensembles de données d'objets ou les ensembles de données de positions sont transmis à l'interface de réseau *NS* dans des intervalles de temps définis.

5. Procédé selon la revendication 3 ou 4,
**caractérisé en ce que**
les ensembles de données d'objets ou les ensembles de données de positions formés dans un lecteur *R* sont traités avant qu'ils soient transmis à l'interface de réseau *NS.*

6. Procédé selon la revendication 5,
**caractérisé en ce que**
seulement un ensemble de données d'objets ou un ensemble de données de positions est transmis à l'interface de réseau *NS* pour chaque support de données RFID *DT* lorsque des ensembles de données d'objets ou des ensembles de données de positions sont redondants à cause de la trajectoire de déplacement.

7. Procédé selon l'une quelconque des revendications précédentes,
**caractérisé en ce que**
les ensembles de données d'objets ou les ensembles de données de positions sont traités dans le serveur de réseau de manière que des ensembles de données d'objets ou des ensembles de données de positions redondants qui sont transmis par des lecteurs *R* différents et reliés au même support de données RFID *DT* sont filtrés.

8. Procédé selon l'une quelconque des revendications précédentes,
**caractérisé en ce que**
la population de supports de données RFID, pour déterminer la position des supports de données RFID *DT*, est pourvue de supports de données RFID de position *P* qui sont disposés dans l'environnement *U* des supports de données selon une distribution définie et ont chacun un ensemble de données de positions ou une identification de référence, l'ensemble de données de positions desdits supports de données RFID de position *P* étant lié à l'ensemble de données d'objets dans le lecteur *R*.

9. Procédé selon l'une quelconque des revendications précédentes,
**caractérisé en ce que**
les lecteurs *R* sont pourvus d'un système de localisation externe pour déterminer la position des supports de données RFID *DT*, et **en ce qu'**un ensemble de données de positions du lecteur *R* est lié à l'ensemble de données d'objets dans le lecteur *R*.

10. Procédé selon l'une quelconque des revendications précédentes,
**caractérisé en ce que**
l'ensemble de données d'objets ou l'ensemble de données de positions dans le lecteur *R* est lié à un paramètre de temps.

11. Procédé selon l'une quelconque des revendications précédentes,
**caractérisé en ce que**
l'ensemble de données d'objets ou l'ensemble de données de positions dans le lecteur *R* est lié à un ensemble de données sur les paramètres environnementaux.

12. Procédé selon l'une quelconque des revendications précédentes,
**caractérisé en ce que**
l'ensemble de données d'objets ou l'ensemble de données de positions dans le lecteur *R* est lié à un ensemble de données sur les paramètres d'intensité du signal.

13. Procédé selon l'une quelconque des revendications précédentes,
**caractérisé en ce que**
des dispositifs personnalisés pourvus d'interfaces correspondantes sont utilisés comme lecteurs *R*.

14. Procédé selon l'une quelconque des revendications précédentes,
**caractérisé en ce que**
des téléphones mobiles pourvus d'interfaces correspondantes sont utilisés comme lecteurs *R*.

15. Procédé selon l'une quelconque des revendications précédentes,
**caractérisé en ce que**
le serveur de réseau est réalisé comme serveur inférieur d'une grappe verticale de serveurs comprenant au moins un serveur supérieur.

16. Procédé selon la revendication 15,
**caractérisé en ce que**
seulement le serveur inférieur de la grappe de serveurs permet un accès aux données d'une mémoire de données comprenant tous les ensembles de données d'objets et les données d'objets des ensembles de données d'objets, et **en ce que** seulement des données d'une quantité partielle définie des données de la mémoire de données du serveur inférieur sont transmises dans la mémoire de données du serveur supérieur.
